# EUROPEAN PATENT SPECIFICATION

(11) **EP 4 592 651 B1**
(45) Date of publication and mention of the grant of the patent: **30.09.2026**
(21) Application number: 24215271.8
(22) Date of filing: 25.11.2024
(51) Int. Cl.: G01J 1/42

(54) **MOBILE ALBEDO MEASUREMENT BENCH**
MOBILE ALBEDOMESSBANK
BANC DE MESURE ALBEDO MOBILE

(30) Priority: 23.01.2024 BR 202024001389 U
(43) Date of publication of application: 30.07.2025
(73) Proprietor: Rio Parana Energia S.A., 79590-000 Selviria Mato Grosso do Sul (BR)
(72) Inventor: DO NASCIMENTO E SILVA, BRUNO, 59063-400 Lagoa Nova, Natal (BR); ALVES DE MATOS, MARIA DE FÁTIMA, 59063-400 Lagoa Nova, Natal (BR); RODRIGUES DE SOUSA, ALAN, 59063-400 Lagoa Nova, Natal (BR); DE OLIVEIRA LIRA, ANDRÉ LUIZ, 59063-400 Lagoa Nova, Natal (BR); DE AZEVEDO SANTOS EMILIAVACA, SAMIRA, 59063-400 Lagoa Nova, Natal (BR); DE MEDEIROS, ANTÔNIO MARCOS, 59063-400 Lagoa Nova, Natal (BR); GAYER DE ARAUJO, PEDRO, 04551-060 Vila Olímpia, São Paulo (BR); TAVARES CRUZ, DANIEL, 04551-060 Vila Olímpia, São Paulo (BR)
(74) Representative: Martin Santos, Victoria Sofia

(56) References cited:
- WO-A1-2021/162544
- QIN YINGHONG ET AL: "The albedo of crushed-rock layers and its implication to cool roadbeds in permafrost regions", COLD REGIONS SCIENCE AND TECHNOLOGY, ELSEVIER, AMSTERDAM, NL, vol. 128, 17 May 2016 (2016-05-17), pages 32 - 37, XP029580631, ISSN: 0165-232X, DOI: 10.1016/J.COLDREGIONS.2016.05.004
- BAI RUIQIANG ET AL: "Study on the solar albedo characteristics of pavement and embankment slope surfaces in permafrost regions", SOLAR ENERGY, ELSEVIER, AMSTERDAM, NL, vol. 237, 12 April 2022 (2022-04-12), pages 352 - 364, XP087026860, ISSN: 0038-092X, [retrieved on 20220412], DOI: 10.1016/J.SOLENER.2022.04.010
- ANONYMOUS: "CM275: Albedometer Mounting Kit", 29 November 2021 (2021-11-29), pages 1 - 6, XP093239879, Retrieved from the Internet <URL:https://web.archive.org/web/20211129021706/https://www.campbellsci.com/cm275#expand>

## Description

### Field of disclosure

This disclosure is related to albedo measurement. More specifically, it refers to a mobile and portable bench for measuring surface albedo.

### Background of the art

Measuring albedo is a fundamental process in the field of photovoltaic generation with bifacial modules. Albedo is the fraction of incident solar radiation that is reflected by the earth's surface, i.e., the ability of a surface to reflect sunlight. For bifacial photovoltaic modules, the albedo is particularly relevant, as these devices have the ability to capture sunlight from both the front and rear faces, while also taking advantage of the light reflected by the ground or other nearby surfaces.

The Importance of Albedo Measurement for Photovoltaic Generation with Bifacial Modules:
Energy Efficiency: Accurate albedo measurement is essential to precisely estimate the energy generated by a bifacial module, since reflected light contributes significantly to the system's overall performance.
Layout optimization: By knowing the albedo of the area in which the bifacial modules will be installed, designers can optimize the layout of the solar plants, positioning them in such a way as to maximize the use of this reflected irradiation.
Project feasibility: Accurate albedo determination is also crucial in the project planning phase, as it allows the economic and technical feasibility of installing bifacial modules in a given location to be assessed.
Decision-making: As albedo is a characteristic that can vary over time, with reliable albedo data, solar plant operators can make informed decisions about monitoring and maintaining the system, ensuring its efficiency over time.

The commercial albedo measuring stations currently available have some significant disadvantages:
Assembly complexity: The existing stations are made up of materials and equipment that are complex to assemble, which increases the difficulty of installation.
High cost: The high cost of these commercial stations means that access to this technology is restricted to large enterprises and institutions with hefty budgets.

### State of the art

Document WO2021162544A1, entitled "Geometrically and spectrally resolved albedometers for bifacial modules", discloses a geometrically and spectrally resolved albedometer for a photovoltaic module, a method for determining reflected light characteristics, a method for optimizing the reflected light performance of a solar cell, and a computer program for resolving light geometrically and spectrally.

Document WO2023158302A1, entitled "Casing for irradiance sensors", relates to a sensor for measuring light, in particular for measuring solar irradiance on a flat surface, more particularly a sensor designed to measure the flux density of solar radiation, such as from the hemisphere above, within a limited wavelength range, a casing for such a sensor, a sensor comprising said casing and a photovoltaic module or system comprising said sensor.

Document CN208155849A, entitled "Portable multifunctional albedo observation device", discloses a portable multifunctional albedo observation device comprising an A-frame. A crossbar is connected to the A-frame and comprises a sleeve tube, a conjugation tube, a thick hollow rod and a thin hollow rod. The hollow thick rod and the hollow thin rod are connected by the connecting tube to form a telescopic rod. The sleeve tube covers the A-frame. The rear end of the crossbar is provided with a fixed device for connecting a radiometer. The albedo observation device also includes a black light screen. The lower part of the black light screen is connected to a black telescopic support rod. The black light screen can be used to measure the light scattering albedo of the sky. The device is portable, has a high degree of integration and high operating efficiency, can be conveniently moved around a large scope in nature to obtain albedo data, can measure the albedo parameter of skylight scattering and provides effective parameters for verifying an albedo model. The device is painted black and light pollution is reduced as much as possible.

The publication "The albedo of crushed-rock layers and its implication to cool roadbeds in permafrost regions" by Yinghong Qin et al., Cold Regions Science and Technology, 128, p.32-37, 17 May 2016 discloses an albedo measuring device comprising a supporting element, an arm supported on the supporting element and pyranometers directly attached to the arm. For measurements the albedo measuring device is levelled.

### Summary of the invention

The present invention discloses a mobile albedo measurement device according to claim 1 complying with the standards of ASTM E1918, in which pyranometers for measuring the incidence of solar radiation are attached to a leveling tray, which in turn is attached to the arm of the device. The leveling tray is adjustable to ensure that the pyranometers are perfectly parallel with the surface to be analyzed. This results in a more accurate and reliable measurement of albedo compared to the state of the art. Other advantages achieved by the invention are greater mobility, low cost and better usability on uneven surfaces and in remote locations.

### Brief description of drawings

The invention will be described below with reference to its typical embodiments and also with reference to the attached drawings, in which:
Figure 1 is a schematic representation of the albedo measuring device according to the invention.
Figure 2 is a representation of the albedo measuring device according to the invention.
Figure 3 is a representation of the albedo measuring device according to the invention.
Figure 4A is a representation of the lower plate of the leveling tray according to the invention.
Figure 4B is a representation of the upper plate of the leveling tray according to the invention.
Figure 5 is a representation of the sets of screws, nuts, springs and washers according to the invention.
Figure 6 is a representation of one of the sets of screws, nuts, springs and washers according to the invention.
Figure 7 is a representation of the bottom sheet of the leveling tray assembled according to the invention.
Figure 8 is a representation of the leveling tray clip fitting onto the arm according to the invention.
Figure 9 is a representation of the leveling tray assembled according to the invention.
Figure 10 is a representation of a detail of the leveling tray assembled according to the invention.
Figure 11 is a bottom view of the leveling tray assembled according to the invention.
Figure 12 is a top view of the leveling tray assembled according to the invention.
Figure 13 is a representation of the leveling tray assembled with the pyranometers according to the invention.

### Detailed description of the invention

Specific modalities of the invention. are described below. In an effort to provide a concise description of these modalities, all the features of an actual implementation may not be described in the descriptive report. It should be appreciated that in the development of any real implementation, as in any engineering or design project, numerous implementation-specific decisions must be made to achieve the developers' specific objectives, such as compliance with system and business-related constraints, which may vary from one implementation to another. Furthermore, it should be appreciated that such a development effort can be complex and time-consuming, but would nevertheless be a routine design and manufacturing undertaking for those of ordinary skill having the benefit of this disclosure.

State-of-the-art albedo meters generally incorporate a counterweight at the end of the support arm closest to the support to compensate for the weight of the pyranometers located at the other end of the arm. This prevents the weight of the pyranometers from unbalancing the device. However, the pyranometers can still be heavy enough to cause the arm to bend, which would misalign the pyranometers in relation to the ground. This requires the arm to be made of a dense material that is rigid enough to withstand this bending.

The use of a denser, more rigid material in the construction of the arm increases the weight of the albedo measuring device, reducing its portability and mobility, as well as increasing its production costs.

In order to overcome this problem, the present invention discloses a mobile albedo measurement bench conforming to the standards of ASTM E1918, in which the pyranometers are attached to the end of the arm by means of a leveling tray to keep the pyranometers parallel to the analyzed surface. In this way, the measuring bench of the present invention achieves a more accurate and reliable measurement of the albedo of the analyzed surface.

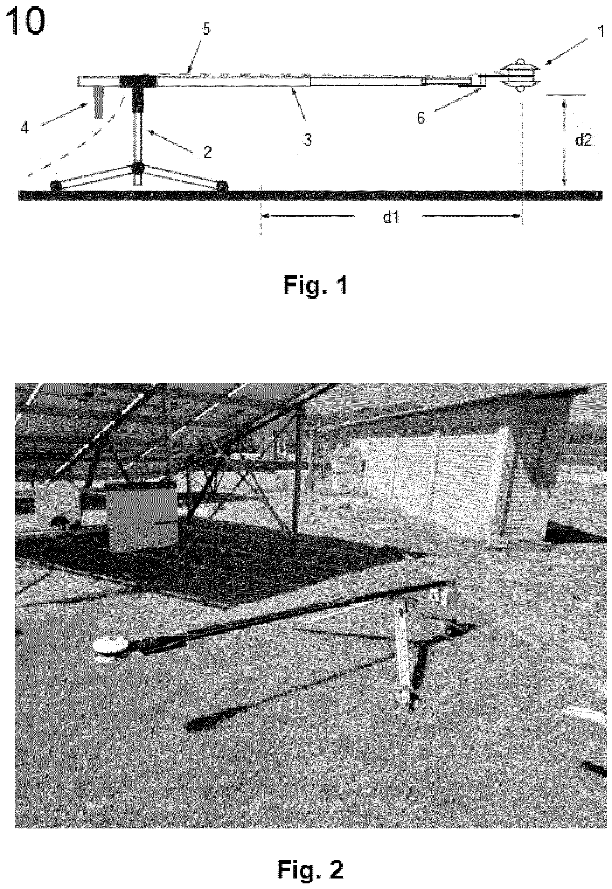

Figure 1 is a schematic view of the albedo measuring device 10 according to the present invention. The components of device 10 are described below:
Supporting element 2: forms the base of the structure, serving as a support for the other components. A conventional aluminium topographic tripod that meets the requirements of the ISO 12858-2 standard can be used. The supporting element 2 must allow the height to be adjusted in such a way as to guarantee the positioning of the pyranometers 1 at a height d2 of 50 centimeters from the analyzed surface, in accordance with ASTM E1918. Preferably, supporting element 2 should have a fixing element for the equipment. Preferably, the fastening element and a bolt to use a square nut with dimensions equivalent to the width of the lower rail of the arm 3.
Arm 3: forms the rod for supporting pyranometers 1, preferably made of an aluminum profile in accordance with the invention. A commercial aluminum profile of around 2.60 meters can be used to mount photovoltaic modules on roofs. To make it easier to transport the device, the arm can be sectioned to form, for example, two 1.30-meter rods. To connect the rod in the field in a simplified way, two aluminum profile joints should be used, one on the bottom rail and one on the side rail of the profile. Preferably, arm 3 is painted black to reduce light reflection from it and reduce the influence on the albedo measurement. The arm 3 or its sectioned rods must be firmly fixed to the supporting element 2 to prevent movement due to the action of the winds and must be mounted so that the distance d1 between the pyranometers 1 and the supporting element 2 is approximately 2 meters, as required by ASTM E1918, in order to cast as little shadow as possible on the surface being analyzed. In addition, the arm must extend beyond the supporting element 2 in the opposite direction to the pyranometers 1 for the attachment of a counterweight 4.
Counterweight 4: Due to the bending moment caused by the weight of the pyranometers 1 at the end of arm 3, preferably a structure that acts as a counterweight is installed at the opposite end of arm 3 to stabilize device 10. The counterweight can be a metal structure with a central hole similar in profile to arm 3, or a canvas bag filled with sufficient gravel to ensure the stability of the albedo measuring device 10.
Leveling tray 6: structure for leveling pyranometers 1 in order to prevent bending due to the weight of pyranometers 1. It is preferably made up of two aluminum plates at least 5 mm thick, designed to reduce their shadow on the surface being analyzed. To do this, the sheet can be cut so that its dimensions are smaller than those of pyranometer 1, avoiding the projection of additional shadows. One of the plates will have the pyranometers 1 attached directly to it, so it must have a hole compatible with the screws used to attach the pyranometers 1. The other plate is attached to arm 3 by any means deemed appropriate, for example, using screws or clips for photovoltaic modules. The plates of leveling tray 6 are fastened together with at least three screws. Further details will be provided below.
Pyranometers 1: two vertically aligned pyranometers are used, a first pyranometer pointed upwards to receive the incident solar irradiation and a second pyranometer pointed downwards to receive the solar radiation reflected by the analyzed surface. Pyranometers 1 can be any irradiance measurement device from the state of the art that is considered suitable.
Cables 5: optional elements that allow communication between pyranometers 1 and a data acquisition device away from device 10. The cables 5 can be dispensed with if the pyranometers 1 are capable of storing the collected data in an internal memory which is then downloaded, or if the pyranometers 1 are capable of transmitting the data wirelessly.
Data acquisition device (not shown): to acquire the data collected by the pyranometers. A commercial datalogger can be used, configured to obtain the data from pyranometers 1 with a temporal resolution of 1 second. Subsequently, the data in the data acquisition device must be analyzed and processed to ensure that all measured points are within the determinations of ASTM E1918, and to reliably obtain the albedo values (reflected irradiance divided by incident irradiance).

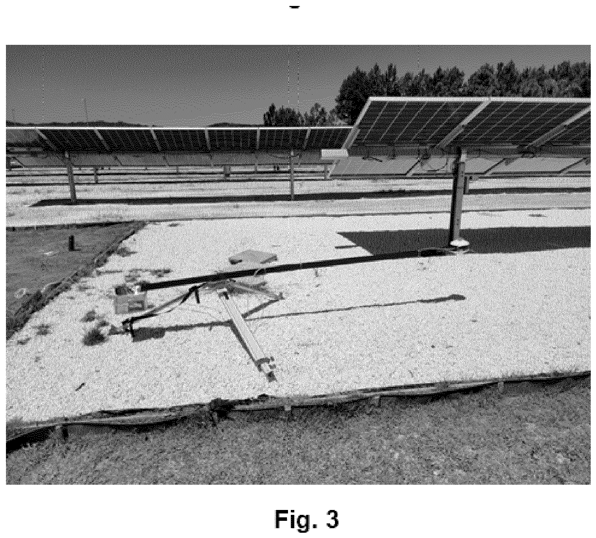

Figure 2 and figure 3 show device 10 according to the present disclosure in use during validation tests.

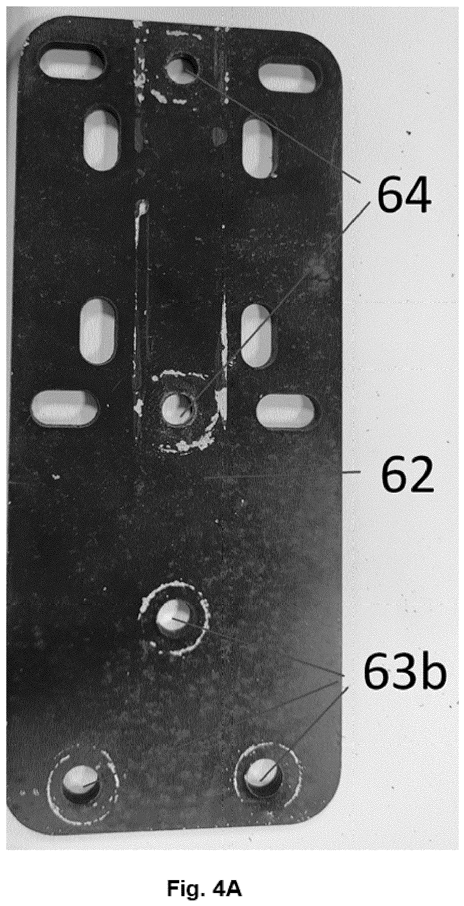

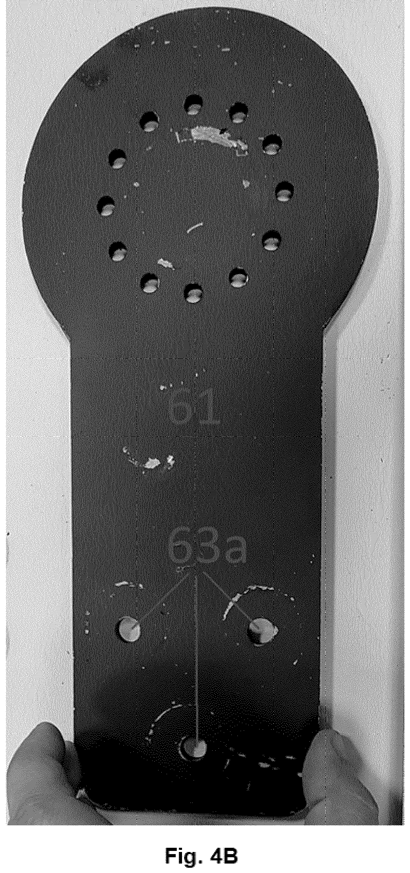

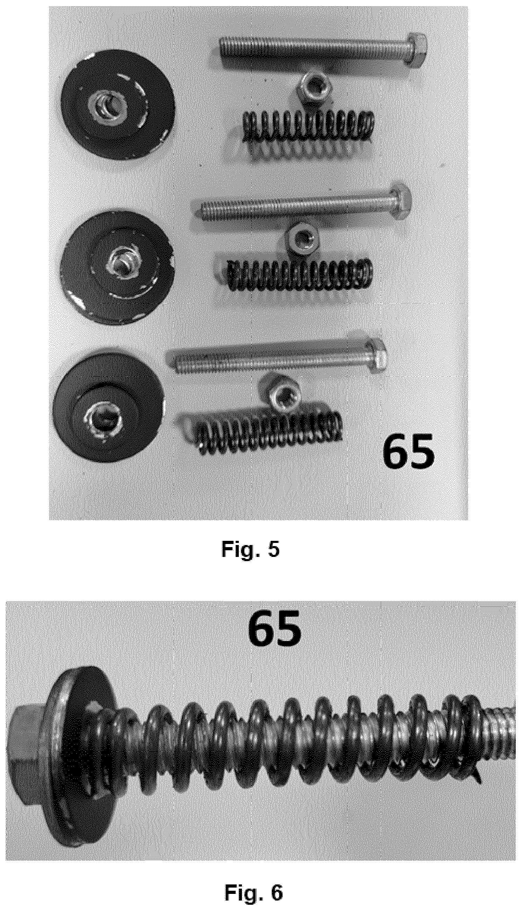

Figure 4A and figure 4B show details of the leveling tray 6 according to the invention. The upper plate 61 is designed in a mostly rectangular shape with one of its ends in an approximately circular shape to fit the shape of the pyranometers 1 and provide better support, and with a compatible hole for attaching the pyranometers 1. This end can be of any other shape and have any other type of hole deemed appropriate to better support the pyranometers 1. The opposite end is rectangular and has a hole 63a for fixing with preferably three sets of screws, washers and nuts 65 (figure 5). Preferably, the screws are wrapped in springs to help level the pyranometers 1 with the ground. For example, when loosening the nuts for level adjustment, the upper plate 61 moves along with the nut that has been loosened. The springs ensure that the upper plate 61 is always in the position that the nuts were set to in the leveling adjustment. Figure 5 and figure 6 show the 65 sets in more detail.

The lower plate 62 has hole 63b compatible with hole 63a to receive the assemblies 65. The lower plate 62 also has a hole 64 to receive a fastening to arm 3. Preferably, this fastening is a clip 66 for fitting with arm 3.

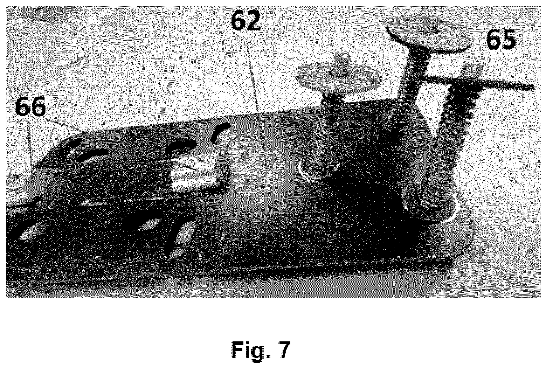

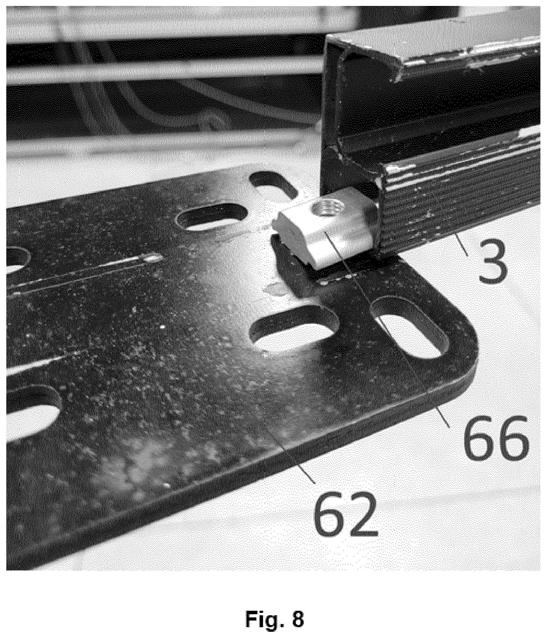

Figure 7 shows the lower plate 62 assembled with the set of screws and nuts 65 and clips 66. Figure 8 shows a detail of the clips 66 for connection to arm 3. The lower plate 62 slides towards arm 3, engaging and securing the clips 66 on arm 3.

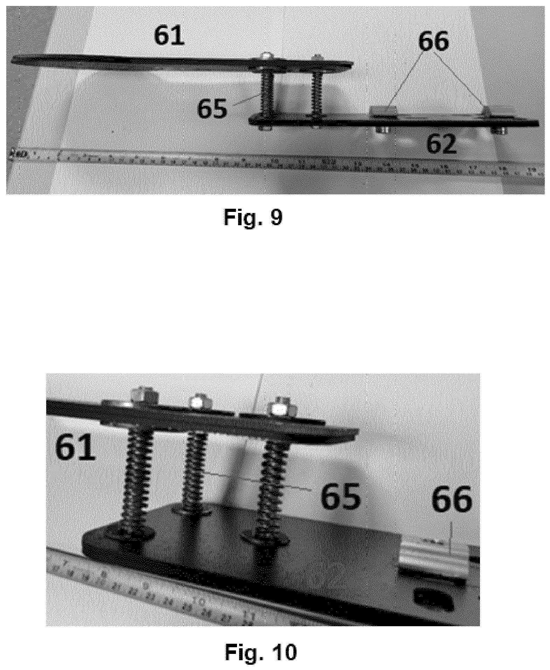

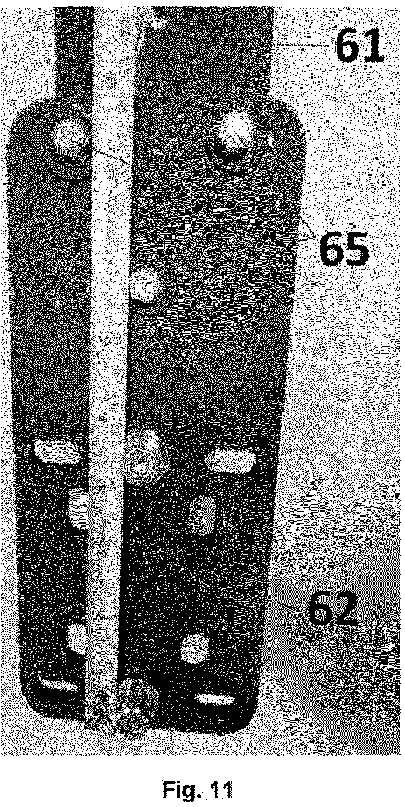

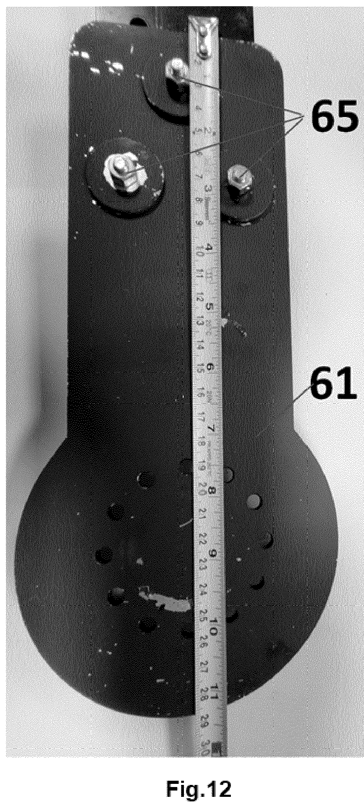

The assembled leveling tray 6 is seen in figure 9 and figure 10. Figure 11 is a bottom view of the assembled leveling tray 6, where the screws, nuts, and washers of the assembly 65 and those used to attach the clips 66 are visible. Figure 12 is a top view of the assembled leveling tray 6, with the upper part of the assembly 65 visible.

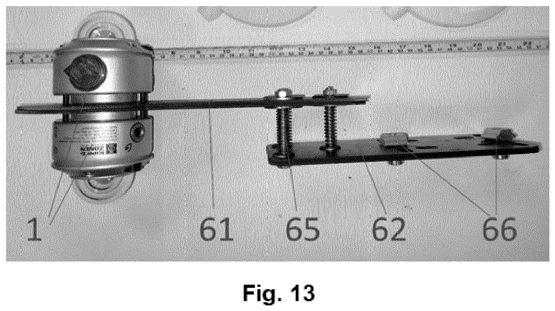

The leveling tray 6 is seen in figure 13 assembled and with the pyranometers 1 attached to it.

Each nut and bolt set 65 can be adjusted individually by tightening or loosening each nut of each set 65. This ensures that the pyranometers 1 are perfectly parallel to the surface to be analyzed. The adjustment of the leveling tray 6 can also compensate for irregularities in the surface on which the supporting element 2 rests, allowing the device 10 to be used in rough areas. To check that pyranometers 1 are parallel to the surface, a leveling device can be used, for example a leveling bubble from pyranometer 1 itself.

Since the leveling tray 6 guarantees the parallelism of the pyranometers 1, the arm 3 can be made of a lighter and less thick material, reducing the overall weight and cost of the device 10, increasing its portability and mobility. For its part, the leveling tray 6 is preferably constructed so that it does not give way under the weight of the pyranometers 1. Preferably, plates 61 and 62 are at least 5 mm thick.

According to this disclosure, the device 10 as described is lightweight, portable, highly mobile and low-cost. These advantageous features allow the device 10 to be transported in small vehicles and handled by personnel without difficulty.

Device 10 of the invention is ideal for use in remote areas. In this case, it is highly desirable that the data acquisition device is compatible with batteries.

Although aspects of the present disclosure may be susceptible to various modifications and alternative forms, specific modalities have been shown by way of example in the drawings and have been described in detail in this document. But it should be understood that the invention is not intended to be limited to the particular forms disclosed. Instead, the invention covers all modifications, equivalents and alternatives that fall within the scope of the invention as defined by the following attached claims.

## Claims

1. Albedo measuring device (10), comprising:
a supporting element (2), an arm (3) supported on the supporting element (2), and pyranometers (1),
the device (10) being **characterized in that** it additionally comprises a leveling tray (6) attached to one end of the arm (3), in which the pyranometers (1) are attached to the leveling tray (1).

2. Device (10) according to claim 1, **characterized in that** the leveling tray comprises an upper plate (61), a lower plate (62), three sets (65) of screws, washers and nuts, and a clip (66).

## Patentansprüche

1. Vorrichtung (10) zur Messung der Albedo, umfassend:
ein Tragelement (2), einen an dem Tragelement (2) abgestützten Arm (3) und Pyranometer (1),
wobei die Vorrichtung (10) **dadurch gekennzeichnet ist, dass** sie ferner eine Nivellierplatte (6) umfasst, die an einem Ende des Arms (3) befestigt ist, wobei die Pyranometer (1) an der Nivellierplatte (6) befestigt sind.

2. Vorrichtung (10) nach Anspruch 1, **dadurch gekennzeichnet, dass** die Nivellierplatte eine obere Platte (61), eine untere Platte (62), drei Sätze (65) aus Schrauben, Unterlegscheiben und Muttern sowie eine Klammer (66) umfasst.

## Revendications

1. Dispositif de mesure de l'albédo (10), comprenant:
un élément de support (2), un bras (3) supporté par l'élément de support (2), et des pyranomètres (1),
le dispositif (10) étant **caractérisé en ce qu'**il comprend en outre un plateau de mise à niveau (6) fixé à une extrémité du bras (3), les pyranomètres (1) étant fixés au plateau de mise à niveau (6).

2. Dispositif (10) selon la revendication 1, **caractérisé en ce que** le plateau de mise à niveau comprend une plaque supérieure (61), une plaque inférieure (62), trois ensembles (65) de vis, de rondelles et d'écrous, ainsi qu'une pince (66).
